# EUROPÄISCHE PATENTANMELDUNG

(11) **EP 3 981 261 A1**
(43) Veröffentlichungstag der Anmeldung: **13.04.2022**
(21) Anmeldenummer: 21201004.5
(22) Anmeldetag: 05.10.2021
(51) Int. Cl.: A23N 12/08, A23N 12/10

(54) **BEHANDLUNGSANORDNUNG ZUM TROCKNEN UND/ODER RÖSTEN EINES LEBENSMITTELS**

(30) Priorität: 07.10.2020 DE 102020126276
(71) Anmelder: Hamburg Dresdner Maschinenfabriken Verwaltungsgesellschaft mbH, 01239 Dresden (DE)
(72) Erfinder: Lohmüller, Dr. Tobias, 71691 Freiberg am Necker (DE)
(74) Vertreter: terpatent Patentanwälte ter Smitten Eberlein-Van Hoof Rütten Daubert

(57) **Zusammenfassung**

Behandlungsanordnung (2) zum Trocknen und/oder Rösten eines Lebensmittels, insbesondere Kakaobohnen oder Kakaonibs, mit einer Gehäuseanordnung (4), die zumindest ein Trommelgehäuse (6) mit einer Behandlungstrommel (8), eine Heizeinrichtung (16) zum Erhitzen eines Heizgases und Gasführungsanordnungen (23) aufweist, wobei diese Gasführungsanordnungen Gaszuführ- bzw. Gasabführanordnungen (20, 22) zum Zu- bzw. Abführen des Heizgases in das bzw. aus dem Trommelgehäuse (6) und zum Zu- bzw. Abführen des Reingases in die bzw. aus der Behandlungstrommel (8) aufweisen, wobei eine Abzweiganordnung (18) zur konduktiven und konvektiven Wärmeübertragung vorgesehen ist, wobei den jeweiligen Gasführungsanordnungen (20, 22) mindestens eine Strömungseinrichtung (28, 38, 62; 38') zugeordnet sind sowie diese Zuführ- bzw. Abführleitungen (27, 30, 36, 46, 60; 46', 60', 72), Volumenstrom-Regelorgane (29, 32, 33, 34, 40, 52, 54, 56, 64; 76, 78) und mindestens ein Sensororgan aufweisen, wobei zumindest in der Zuführleitung (27) zur konduktiven Wärmeübertragung ein Volumenstrom-Regelorgan (40) vorgesehen ist und wobei für die Zuführleitung (27) zur konduktiven Wärmeübertragung eine Reingas-Zuführleitung (26; 26') vorgesehen ist.

## Beschreibung

Die Erfindung betrifft eine Behandlungsanordnung zum Trocknen und/oder Rösten eines Lebensmittels, insbesondere Kakaobohnen oder Kakaonibs, mit einer Gehäuseanordnung, die zumindest ein Trommelgehäuse mit einer Behandlungstrommel, eine Heizeinrichtung zum Erhitzen eines Heizgases und Gasführungsanordnungen aufweist, wobei diese Gasführungsanordnungen Gaszuführ- bzw. Gasabführanordnungen zum Zu- bzw. Abführen des Heizgases in das bzw. aus dem Trommelgehäuse und zum Zu- bzw. Abführen des Reingases in die bzw. aus der Behandlungstrommel aufweisen, wobei eine Abzweiganordnung zur konduktiven und konvektiven Wärmeübertragung vorgesehen ist, wobei den jeweiligen Gasführungsanordnungen mindestens eine Strömungseinrichtung zugeordnet sind sowie diese Zuführ- bzw. Abführleitungen, Volumenstrom-Regelorgane und mindestens ein Sensororgan aufweisen.

Derartige Behandlungsanordnungen sind aus dem Stand der Technik hinlänglich bekannt. Hierbei ist es grundsätzlich aus der europäischen Patentschrift EP 2 273 888 B1 bekannt eine Behandlungstrommel von Außen zu beheizen, um auf diese Weise Kakaobohnen oder Kakaonibs konduktiv zu trocken und /oder zu rösten, aber auch einen erhitzten Reingasstrom durch die Behandlungstrommel zu führen, um das Trocknen und/oder Rösten konvektiv durchzuführen. Um das Behandlungsverfahren weiter zu vereinfachen und den Reinigungsaufwand der Behandlungsanordnung zu vermindern, ist es darüber hinaus aus der europäischen Patentschrift EP 2 947 998 B1 bekannt, zusätzliche Feuchtigkeit in die Behandlungstrommel einzuführen, wobei ein Sterialisationspeak in der Messkurve eines Mikrowellensensors erfasst wird. Ebenfalls aus dieser Patentschrift ist eine Wärmetauschereinrichtung bekannt, durch die Reinluft durch das erzeugte Heizgas erhitzt wird und in die Behandlungstrommel geführt wird. Es hat sich jedoch gezeigt, dass die Steuerung des zuzuführenden und abzuführenden Heizgases und Reingases nicht ideal erfolgt, wobei es insbesondere schwierig ist, eine optimale Abstimmung des konvektiven und konduktiven Wärmeeintrages vorzunehmen.

Aufgabe der Erfindung ist es daher, eine Behandlungsanordnung bereitzustellen, die die oben genannten Nachteile auf einfache und kostengünstige Weise vermeidet.

Diese Aufgabe wird dadurch gelöst, dass zumindest in der Zuführleitung zur konduktiven Wärmeübertragung ein Volumenstrom-Regelorgan vorgesehen ist und wobei für die Zuführleitung zur konduktiven Wärmeübertragung eine Reingas-Zuführleitung vorgesehen ist. Hierdurch ist es insbesondere möglich, dass in die Behandlungstrommel einzuführende Reingas sehr schnell zu erhitzen, um nachfolgend die Temperatur oder den Feuchtigkeitsanteil einfach steuern zu können. Es ist anzumerken, dass unter dem Begriff Reingas auch Frischluft ohne Rauchgasanteil verstanden werden kann.

In einer besonders vorteilhaften Ausführungsform ist eine Reingas-Bypasszuführleitung zur Umgehung der Wärmetauschereinrichtung als Teil der Gaszuführanordnung des Reingases vorgesehen. Hierbei kann eine Reingas-Bypasszuführleitung zur Umgehung der Wärmetauschereinrichtung als Teil der Gaszuführanordnung des Reingases vorgesehen sein.

In besonders vorteilhafter Weise ist die Strömungsmaschine für das Reingas vor der Abzweiganordnung angeordnet. Hierdurch ist es auf einfache Weise möglich, sowohl den Volumenstrom durch die Wärmetauschereinrichtung als auch durch die Reingas-Bypasszuführleitung mit einer Strömungsmaschine, wie zum Beispiel einem Ventilator, zu steuern.

Dadurch, dass ein Volumenstrom-Regelorgan in der Zuführleitung zur konduktiven Wärmeübertragung und/oder in der Reingas-Bypasszuführleitung vorgesehen ist, kann der Volumenstrom auch mit Hilfe der Volumenstrom-Regelorgane einfach und effizient gesteuert werden.

Darüber hinaus kann ein Volumenstrom-Regelorgan in einem Zuführabschnitt in der Zuführleitung zur konduktiven Wärmeübertragung zwischen der Reingas-Bypasszuführleitung und einer Reingas-Einlassöffnung der Behandlungstrommel vorgesehen sein.

In besonders vorteilhafter Weise ist eine Strömungsmaschine in der Konvektivgas-Abführleitung vorgesehen, wobei vor der Strömungsmaschine ein Volumenstrom-Regelorgan vorgesehen ist. Hierbei kann sich in vorteilhafter Weise die Konvektivgas-Abführleitung hinter der Abgas-Volumenstromeinrichtung in einen Abgas-Rückführabschnitt zur Heizeinrichtung und in einen Abgas-Abführanschnitt zur Umgebung mit jeweils einem Volumenstrom-Regelorgan aufteilen. Hierdurch ist es auf besonders einfache Weise möglich, die noch verbleibende Energie im Abgas zu nutzen. Hierbei kann der Abgas-Rückführabschnitt eine Reingaszuführeinrichtung aufweisen, um beispielsweise den Frischluftanteil zu erhöhen.

Um den Reingasvolumenstrom noch besser regeln zu können, kann eine zweite Strömungsmaschine in der Konduktivgas-Abführleitung vorgesehen sein, wobei vor der zweiten Strömungsmaschine ein Volumenstrom-Regelorgan vorgesehen ist. Zum Abscheiden von sogenannten "Häutchen" kann in vorteilhafter Weise hierbei zwischen dem Volumenstrom-Regelorgan und der zweiten Strömungsmaschine eine Zykloneinrichtung vorgesehen sein.

Alternativ kann die Konduktivgas-Abführleitung mit einem Volumenstrom-Regelorgan in einem Verbindungspunkt mit einer Heizgas-Abführleitung vor der Abgas-Volumenstromeinrichtung angeschlossen sein. Hierbei ist es vorteilhaft, wenn zwischen dem Verbindungspunkt und der Strömungsmaschine eine Zykloneinrichtung vorgesehen ist.

Um die Feuchtigkeit des aus der Behandlungstrommel abgeführten Reingases auf einfache Weise messen zu können, um hiermit Rückschlüsse auf den Röst- bzw. Trocknungsvorgang zu erlangen, kann in der Konduktivgas-Abführleitung ein Feuchtigkeitssensororgan vorgesehen sein.

Als besonders umwelverträgliches Brennergas kann in der Heizeinrichtung Wasserstoff einsetzbar sein.

Die Erfindung wird anhand einer Zeichnung näher erläutert. Hierbei zeigt:
Figur 1 eine schematische Ansicht einer erfindungsgemäßen Behandlungsanordnung,
Figur 2 eine schematische Ansicht einer alternativen Ausführungsform einer Gaszuführanordnung, und
Figur 3 eine schematische Ansicht einer alternativen Ausführungsform einer Gasabführanordnung.

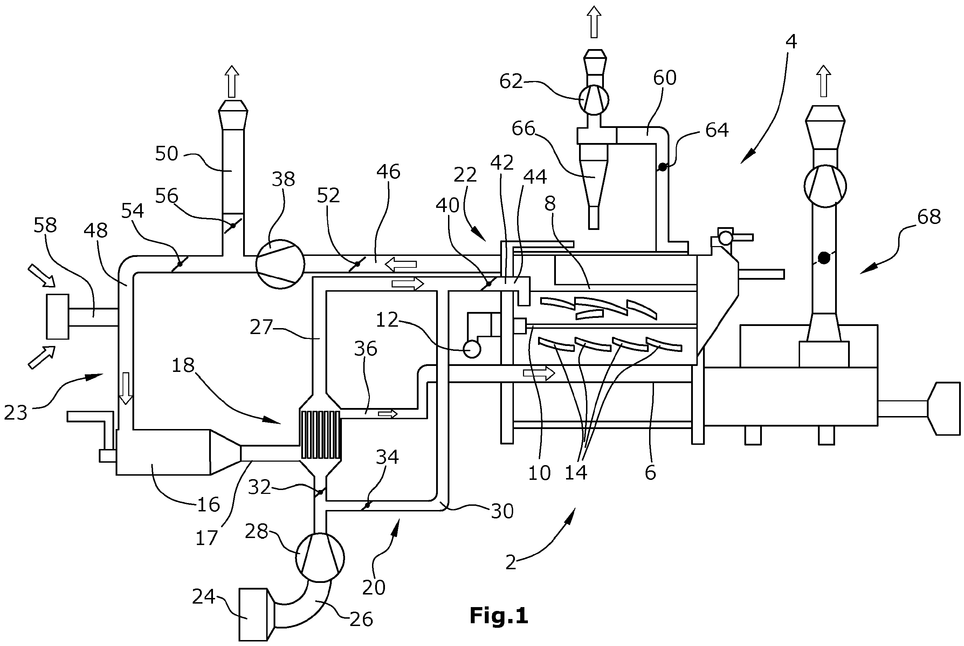

Die Figur 1 zeigt in einer schematischen Ansicht einer erfindungsgemäßen Behandlungsanordnung 2 zum Trocknen und/oder Rösten von Kakaobohnen oder Kakaonibs. Diese Behandlungsanordnung 2 weist eine Gehäuseanordnung 4 auf, die als zentraler Bestandteil ein an sich bekanntes Trommelgehäuse 6 mit einer Behandlungstrommel 8 besitzt. Die geschlossene Behandlungstrommel 8 ist hierbei auf einer Welle 10 gelagert und wird durch eine Antriebseinrichtung 12 angetrieben. Flügelelemente 14 sorgen hierbei für eine Durchmischung der Kakaobohnen oder Kakaonibs.

Mit 16 ist eine Heizeinrichtung zum Erhitzen eines Heizgases vorgesehen. Über eine Heizgasleitung 17 wird das Heizgas zu einer Wärmetauschereinrichtung 18 als Abzweiganordnung geführt, in der das durch die Heizeinrichtung 16 erhitzte Heizgas Wärme an ein zu zuführendes Reingas überträgt.

Wie nachfolgend näher ausgeführt wird, ist eine Gaszuführanordnung 20 und eine Gasabführanordnung 22 als Gasführungsanordnung 23 zum Zu- bzw. Abführen des Heizgases in das bzw. aus dem Trommelgehäuse 6 und zum Zu- bzw. Abführen des Reingases in die bzw. aus der Behandlungstrommel 8 vorgesehen. Das Reingas strömt über eine mit einem nicht näher dargestellten Filterelement versehene Reingas-Zuführöffnung 24 in eine Reingas-Zuführleitung 26 und wird hierbei durch eine Strömungsmaschine 28, die als Ventilator ausgebildet ist und vor der Wärmetauschereinrichtung 18 angeordnet ist, unter Druck in eine Zuführleitung 27 zur konduktiven Wärmeübertragung in die Behandlungstrommel 8 geführt. Um nun im Betrieb die Temperatur des hier vorliegenden Reingases in der Behandlungstrommel 8 bzw. die Feuchtigkeit optimal Steuern zu können, ist eine Reingas-Bypasszuführleitung 30 als Teil der Gaszuführanordnung 20 vorgesehen. Diese Reingas-Bypasszuführleitung 30 zweigt hinter der Strömungsmaschine 28 von der Reingas-Zuführleitung 26 ab und ist stromabwärts der Wärmetauschereinrichtung 18 wieder mit Zuführleitung 27 verbunden. Sowohl vor der Wärmetauschereinrichtung 18 in der Reingas-Zuführleitung 26 als auch in der Reingas-Bypasszuführleitung 30 sind Volumenstrom-Regelorgane 32, 34 vorgesehen. Als weiterer Teil der Gaszuführanordnung ist eine Heizgas-Zuführleitung 36 zur konvektiven Wärmeübertragung zu nennen, über die das durch die Wärmetauschereinrichtung 18 geführte Heizgas angetrieben durch eine noch später zu beschreibende Strömungsmaschine 38 in das Trommelgehäuse 6 geführt wird, um die Behandlungstrommel 8 von außen zu erhitzen. Ein weiteres Volumenstrom-Regelorgan 40 ist im vorliegenden Ausführungsbeispiel in einem Zuführabschnitt 42 in der Reingas-Zuführleitung 26 zwischen der Reingas-Bypasszuführleitung 30 und einer Reingas-Einlassöffnung 44 der Behandlungstrommel 8 vorgesehen.

Die Gasabführungsanordnung 22 weist im Wesentlichen eine Konvektivgas-Abführleitung 46 auf, bei der die bereits genannte Strömungsmaschine 38 vorgesehen ist, und die im vorliegenden Ausführungsbeispiel das Heizgas aus dem Trommelgehäuse 6 abführt. Die Abgasrückführleitung 46 teilt sich hinter der Abgas-Volumenstromeinrichtung 38 in einen Abgas-Rückführabschnitt 48, der im vorliegenden Ausführungsbeispiel Heizgas zurück zur Heizeinrichtung 16 führt, und in einen Abgas-Abführabschnitt 50 zur Umgebung auf. Zur zielgerichteten Steuerung des Abgasvolumenstromes ist in der Konvektivgas-Abführleitung 46 vor der Strömungsmaschine 38 ein Volumenstrom-Regelorgan 52, in dem Abgas-Rückrückführabschnitt 48 ein Volumenstrom-Regelorgan 54 und in dem Abgas-Abführabschnitt 50 ein Volumenstrom-Regelorgan 56 angeordnet. Um im vorliegenden Ausführungsbeispiel den Frischluftanteil im Abgasrückführabschnitt 48 erhöhen zu können, ist eine Reingaszuführeinrichtung 58 vorgesehen.

Als weiterer Teil der Gasabführanordnung 22 ist eine Konduktivgas-Abführleitung 60 vorgesehen, durch die das in der Behandlungstrommel 8 befindliche Gas an die Umgebung abgeführt wird. Die Konduktivgas-Abführleitung 60 weist eine zweite Strömungsmaschine 62 und ein davor angeordnetes Volumenstrom-Regelorgan 64 auf. Zum Auffangen von sogenannten "Häutchen" ist zudem eine Zykloneinrichtung 66 vorgesehen.

Des weiteres ist eine an sich bekannte Kühlauffangvorrichtung 68 zur Aufnahme der Kakaobohnen bzw. Kakaonibs dargestellt.

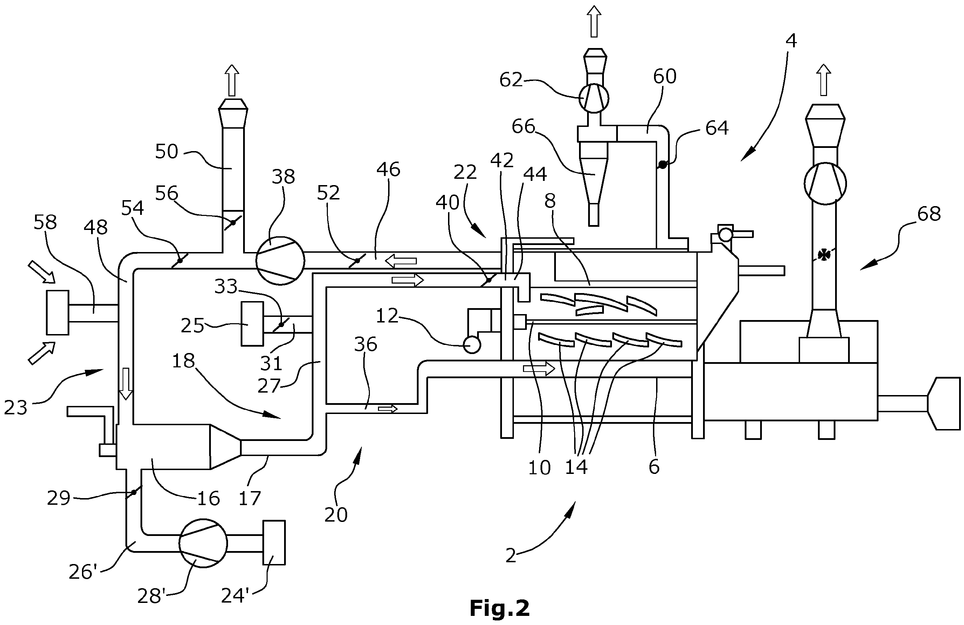

Figur 2 zeigt nun eine schematische Ansicht einer alternativen Ausführungsform für die Gaszuführanordnung 20 aus Figur 1. Es wird darauf hingewiesen, dass nachfolgend lediglich auf die Unterschiede zu Figur 1 eingegangen wird.

Hierbei wurde die Abzweiganordnung 18 als einfache Abzweigung bzw. Aufteilung der Heizgasleitung 17 in die Zuführleitung 27 zur konduktiven Wärmeübertragung und in die Heizgas-Zuführleitung 36 zur konvektiven Wärmeübertragung ausgeführt. Die Zufuhr von Reingas erfolgt über die Reingas-Zuführleitung 26' und die Zuführöffnung 24' in die Heizeinrichtung 16. Auch hier ist die Strömungsmaschine 28' in der Reingas-Zuführleitung 26' vorgesehen. Durch eine Volumenstrom-Regelorgane 29 kann der Reingaszufluss zusätzlich gesteuert werden.

In die Zuführleitung 27 kann hier über eine zweite Reingas-Zuführleitung 31 und eine zweite Zuführöffnung 25 Reingas, das über ein Volumenstrom-Regelorgan 33 gesteuert werden kann zur Temperaturabsenkung zugemischt werden.

Grundsätzlich ist es durch eine derartige Gaszuführanordnung 20 auf einfache Weise möglich einen unterschiedlichen Volumendurchfluss in der Zuführleitung 27 zur konduktiven Wärmeübertragung (bspw. 8000 m³/h) und in der Heizgas-Zuführleitung 36 zur konvektiven Wärmeübertragung (bspw. 4000 m³/h) zu realisieren.

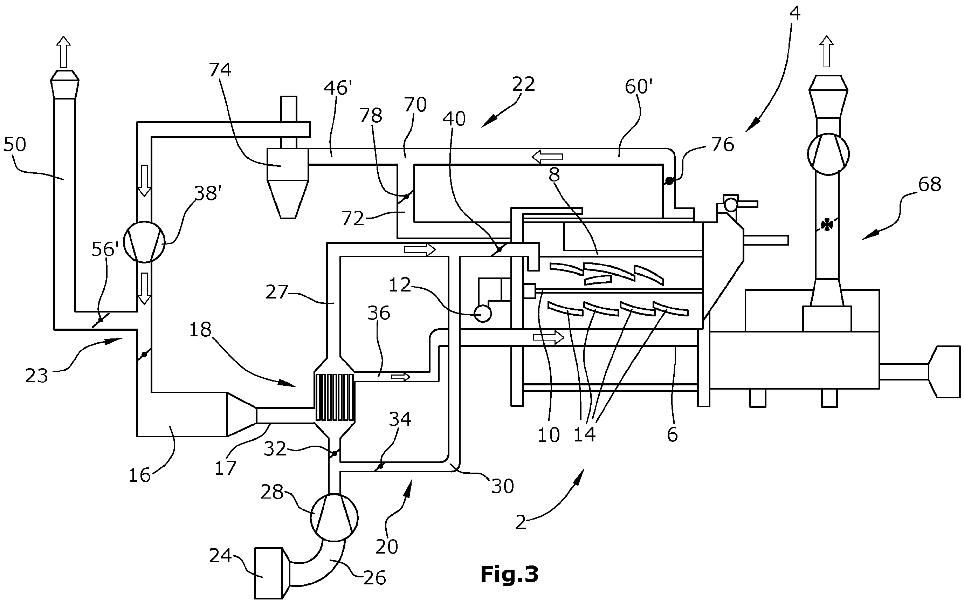

Eine alternative Ausführung einer Gasabführanordnung 22 einer Gasführungsanordnung 23 einer Behandlungsanordnung 2 zeigt Figur 3 in schematischer Ansicht. Hier wird im Gegensatz zum Ausführungsbeispiel der Figur 1 das Reingas über die Konduktivgas-Abführleitung 60' an einem Verbindungspunkt 70 zusammen mit einer Heizgas-Abführleitung 72 zur Konvektivgas-Abführleitung 46' geführt. Zwischen dem Verbindungspunkt 70 und der Strömungsmaschine 38' ist hier eine Zykloneinrichtung 74 vorgesehen. Sowohl in der Konduktivgas-Abführleitung 60' als auch in der Heizgas-Abführleitung 72 sind Volumenstrom-Regelorgane 76 und 78 angeordnet. Von der Abgas-Rückführleitung 48, die wie in Figur 1, Abgas zur Heizeinrichtung 16 zurückführt, zweigt hier der Abgas-Abführabschnitt 50 ab, wobei ebenfalls die Volumenstrom-Regelorgane 54 und 56 vorgesehen sind.

Ansonsten entspricht die Behandlungsanordnung 3 der Behandlungsanordnung 2 aus Figur 1.

In vorteilhafter Weise kann in der Konduktivgas-Abführleitung 60, 60' ein nicht weiter dargestelltes Feuchtigkeitssensororgan vorgesehen.

## Patentansprüche

1. Behandlungsanordnung (2) zum Trocknen und/oder Rösten eines Lebensmittels, insbesondere Kakaobohnen oder Kakaonibs, mit einer Gehäuseanordnung (4), die zumindest ein Trommelgehäuse (6) mit einer Behandlungstrommel (8), eine Heizeinrichtung (16) zum Erhitzen eines Heizgases und Gasführungsanordnungen (23) aufweist, wobei diese Gasführungsanordnungen Gaszuführ- bzw. Gasabführanordnungen (20, 22) zum Zu- bzw. Abführen des Heizgases in das bzw. aus dem Trommelgehäuse (6) und zum Zu- bzw. Abführen des Reingases in die bzw. aus der Behandlungstrommel (8) aufweisen, wobei eine Abzweiganordnung (18) zur konduktiven und konvektiven Wärmeübertragung vorgesehen ist, wobei den jeweiligen Gasführungsanordnungen (20, 22) mindestens eine Strömungseinrichtung (28, 38, 62; 38') zugeordnet sind sowie diese Zuführ- bzw. Abführleitungen (27, 30, 36, 46, 60; 46', 60', 72), Volumenstrom-Regelorgane (29, 32, 33, 34, 40, 52, 54, 56, 64; 76, 78) und mindestens ein Sensororgan aufweisen,
**dadurch gekennzeichnet, dass**
zumindest in der Zuführleitung (27) zur konduktiven Wärmeübertragung ein Volumenstrom-Regelorgan (40) vorgesehen ist und wobei für die Zuführleitung (27) zur konduktiven Wärmeübertragung eine Reingas-Zuführleitung (26; 26') vorgesehen ist.

2. Behandlungsanordnung nach Anspruch 1, **dadurch gekennzeichnet, dass** eine Wärmetauschereinrichtung (18) zum Erhitzen eines Reingases als Abzweiganordnung vorgesehen ist.

3. Behandlungsanordnung nach Anspruch 2, **dadurch gekennzeichnet, dass** eine Reingas-Bypasszuführleitung (30) zur Umgehung der Wärmetauschereinrichtung (18) als Teil der Gaszuführanordnung (20) des Reingases vorgesehen ist.

4. Behandlungsanordnung nach einem der Ansprüche 1 - 3, **dadurch gekennzeichnet, dass** die Strömungsmaschine (28) für das Reingas vor der Abzweiganordnung (18) angeordnet ist.

5. Behandlungsanordnung nach einem der vorhergehenden Ansprüche, **dadurch gekennzeichnet, dass** ein Volumenstrom-Regelorgan (40) in der Zuführleitung (27) zur konduktiven Wärmeübertragung vorgesehen ist.

6. Behandlungsanordnung nach einem der Ansprüche 3 - 5, **dadurch gekennzeichnet, dass** ein Volumenstrom-Regelorgan (34) in der Reingas-Bypasszuführleitung (30) vorgesehen ist.

7. Behandlungsanordnung nach einem der vorhergehenden Ansprüche, **dadurch gekennzeichnet, dass** ein Volumenstrom-Regelorgan (40) in einem Zuführabschnitt (42) in der Zuführleitung (27) zur konduktiven Wärmeübertragung zwischen der Reingas-Bypasszuführleitung (30) und einer Reingas-Einlassöffnung (44) der Behandlungstrommel (8) vorgesehen ist.

8. Behandlungsanordnung nach einem der vorhergehenden Ansprüche, **dadurch gekennzeichnet, dass** eine Strömungsmaschine (38) in der Konvektivgas-Abführleitung (46) vorgesehen ist, wobei vor der Strömungsmaschine (38) ein Volumenstrom-Regelorgan (52) vorgesehen ist.

9. Behandlungsanordnung nach Anspruch 8, **dadurch gekennzeichnet, dass** die Konvektivgas-Abführleitung (46; 46') sich hinter der Abgas-Volumenstromeinrichtung (38) in einen Abgas-Rückführabschnitt (48) zur Heizeinrichtung (16) und in einen Abgas-Abführabschnitt (50) zur Umgebung mit jeweils einem Volumenstrom-Regelorgan (54, 56) aufteilt.

10. Behandlungsanordnung nach Anspruch 9, **dadurch gekennzeichnet, dass** der Abgas-Rückführabschnitt (48) eine Reingaszuführeinrichtung (58) aufweist.

11. Behandlungsanordnung nach einem der vorhergehenden Ansprüche, **dadurch gekennzeichnet, dass** eine zweite Strömungsmaschine (62) in einer Konduktivgas-Abführleitung (60) vorgesehen ist, wobei vor der zweiten Strömungsmaschine (62) ein Volumenstrom-Regelorgan (64) vorgesehen ist.

12. Behandlungsanordnung nach Anspruch 11, **dadurch gekennzeichnet, dass** zwischen dem Volumenstrom-Regelorgan (64) und der zweiten Strömungsmaschine (62) eine Zykloneinrichtung (66) vorgesehen ist.

13. Behandlungsanordnung nach einem der vorhergehenden Ansprüche, **dadurch gekennzeichnet, dass** eine Konduktivgas-Abführleitung (60') mit einem Volumenstrom-Regelorgan (76) in einem Verbindungspunkt (70) mit einer Heizgas-Abführleitung (72) vor der Abgas-Volumenstromeinrichtung (38') angeschlossen ist.

14. Behandlungsanordnung nach Anspruch 13, **dadurch gekennzeichnet, dass** zwischen dem Verbindungspunkt (70) und der Strömungsmaschine (38') eine Zykloneinrichtung (74) vorgesehen ist.

15. Behandlungsanordnung nach einem der vorhergehenden Ansprüche, **dadurch gekennzeichnet, dass** in der Konduktivgas-Abführleitung (60, 60') ein Feuchtigkeitssensororgan vorgesehen ist.

16. Behandlungsanordnung nach einem der vorhergehenden Ansprüche, **dadurch gekennzeichnet, dass** in der Heizeinrichtung (16) Wasserstoff als Brennergas einsetzbar ist.
